# FASCICULE DE BREVET EUROPEEN

(11) **EP 2 244 805 B1**
(45) Date de publication et mention de la délivrance du brevet: **06.07.2011**
(21) Numéro de dépôt: 08864730.0
(22) Date de dépôt: 18.12.2008
(51) Int. Cl.: B01D 46/24

(54) **STRUCTURE DE FILTRATION D'UN GAZ A CANAUX HEXAGONAUX CONCAVES OU CONVEXES**
GASFILTRATIONSSTRUKTUR MIT KONKAVEN ODER KONVEXEN HEXAGONALEN KANÄLEN
GAS FILTRATION STRUCTURE WITH CONCAVE OR CONVEX HEXAGONAL CHANNELS

(30) Priorité: 20.12.2007 FR 0760117
(43) Date de publication de la demande: 03.11.2010
(73) Titulaire: Saint-Gobain Centre de Recherches et D'Etudes Europeen, 92400 Courbevoie (FR)
(72) Inventeur: VINCENT, Adrien, F-13440 Cabannes (FR); RODRIGUES, Fabiano, F-84220 Roussillon (FR); LECHEVALIER, David, Cambridge MA 02139 (US)
(74) Mandataire: Lucas, Francois
(86) Numéro de dépôt international: PCT/FR2008/052364
(87) Numéro de publication internationale: WO 2009/081055

(56) Documents cités:
- EP-A- 1 538 133
- WO-A-2005/115589
- WO-A-2007/134897
- DE-U1-202004 013 009
- FR-A- 2 789 327

## Description

L'invention se rapporte au domaine des structures filtrantes comprenant éventuellement une composante catalytique, par exemple utilisées dans une ligne d'échappement d'un moteur à combustion interne du type diesel.

Les filtres permettant le traitement des gaz et l'élimination des suies typiquement issues d'un moteur diesel sont bien connus de l'art antérieur. Ces structures présentent toutes le plus souvent une structure en nid d'abeille, une des faces de la structure permettant l'admission des gaz d'échappement à traiter et l'autre face l'évacuation des gaz d'échappement traités. La structure comporte, entre les faces d'admission et d'évacuation, un ensemble de conduits ou canaux adjacents, le plus souvent de section carrée, d'axes parallèles entre eux séparés par des parois poreuses. Les conduits sont obturés à l'une ou l'autre de leurs extrémités pour délimiter des chambres d'entrée s'ouvrant suivant la face d'admission et des chambres de sortie s'ouvrant suivant la face d'évacuation. Les canaux sont alternativement obturés dans un ordre tel que les gaz d'échappement, au cours de la traversée du corps en nid d'abeille, sont contraints de traverser les parois latérales des canaux d'entrée pour rejoindre les canaux de sortie. De cette manière, les particules ou suies se déposent et s'accumulent sur les parois poreuses du corps filtrant.

A l'heure actuelle, on utilise pour la filtration des gaz des filtres en matière céramique poreuse, par exemple en cordiérite, en alumine, notamment en titanate d'aluminium, en mullite en nitrure de silicium, en un mélange silicium/carbure de silicium ou en carbure de silicium.

De façon connue, durant sa mise en oeuvre, le filtre à particules est soumis à une succession de phases de filtration (accumulation des suies) et de régénération (élimination des suies). Lors des phases de filtration, les particules de suies émises par le moteur sont retenues et se déposent à l'intérieur du filtre. Lors des phases de régénération, les particules de suie sont brûlées à l'intérieur du filtre, afin de lui restituer ses propriétés de filtration. La structure poreuse est alors soumise à des contraintes thermomécaniques radiales et tangentielles intenses, qui peuvent entraîner des micro-fissurations susceptibles sur la durée d'entraîner une perte sévère des capacités de filtration de l'unité, voire sa désactivation complète. Ce phénomène est particulièrement observé sur des filtres monolithiques de grand diamètre.

Pour résoudre ces problèmes et augmenter la durée de vie des filtres, il a été proposé plus récemment des structures de filtration associant plusieurs blocs ou éléments unitaires monolithiques en nid d'abeille. Les éléments sont le plus souvent assemblés entre eux par collage au moyen d'une colle ou d'un ciment de nature céramique, appelés dans la suite de la description ciment de joint. Des exemples de telles structures filtrantes sont par exemple décrits dans les demandes de brevets EP 816 065, EP 1 142 619, EP 1 455 923, WO 2004/090294 ou encore WO 2005/063462. Afin d'assurer une relaxation optimale des contraintes dans une telle structure assemblée, il est connu que les coefficients de dilatation thermique des différentes parties de la structure (éléments de filtration, ciment de revêtement, ciment de joint) doivent être sensiblement du même ordre. De ce fait, lesdites parties sont avantageusement synthétisées sur la base d'un même matériau, le plus souvent le carbure de silicium SiC ou la cordiérite. Ce choix permet en outre d'homogénéiser la répartition de la chaleur lors de la régénération du filtre.

Afin d'obtenir les meilleurs performances de résistance thermomécanique et de perte de charge, les filtres assemblés actuellement commercialisés pour les véhicules légers comportent typiquement environ 10 à 20 éléments unitaires présentant, selon une coupe transversale, une section carrée ou rectangulaire et dont la surface élémentaire en coupe est comprise entre environ 13 cm² et environ 25 cm². Ces éléments sont constitués d'une pluralité de canaux de section le plus souvent carrée. Pour réduire encore la masse du filtre sans réduire ses performances en termes de perte de charge et de stockage en suies, une solution évidente pourrait être de diminuer le nombre d'éléments unitaires dans l'assemblage en augmentant leur taille individuelle. Une telle augmentation n'est cependant pas possible actuellement, en particulier avec des filtres en SiC, sans diminuer de façon inacceptable la résistance thermomécanique du filtre.

Les filtres de plus grande section, actuellement utilisés notamment pour les applications de type «camion», sont réalisés par assemblage au moyen d'un ciment de jointoiement d'éléments de taille similaire à ceux constituant les filtres destinés aux véhicules légers. Le nombre d'éléments unitaires de type de filtre camions est alors très élevé et peut comporter jusqu'à 30 voire 80 éléments. De tels filtres présentent alors une masse globale et une perte de charge trop élevée.

De manière générale, il existe donc à l'heure actuelle un besoin visant à augmenter conjointement les performances globales de filtration et la durée de vie des filtres actuels.

Plus précisément, l'amélioration des filtres peut être directement mesurée par la comparaison des propriétés qui suivent, le meilleur compromis possible entre ces propriétés étant recherché selon l'invention, pour des régimes moteurs équivalents. En particulier, l'objet de la présente invention est un filtre ou un élément de filtre présentant tout à la fois:
- une faible perte de charge occasionnée par une structure filtrante en fonctionnement, c'est-à-dire typiquement lorsque celle-ci est dans une ligne d'échappement d'un moteur à combustion interne, aussi bien lorsque que ladite structure est exempte de particules de suies (perte de charge initiale) que lorsqu'elle est chargée en particules,
- une augmentation de la perte de charge du filtre au cours dudit fonctionnement la plus faible possible, c'est à dire un faible accroissement de la perte de charge en fonction du temps d'utilisation ou plus exactement en fonction du niveau de chargement en suies du filtre,
- une surface totale de filtration élevée,
- une masse de l'élément monolithique adaptée pour assurer une masse thermique suffisante pour minimiser la température maximale de régénération et les gradients thermiques subis par le filtre, qui peuvent eux-mêmes entraîner des fissures sur l'élément,
- un volume de stockage de suies important, notamment à perte de charge constante, de manière à réduire la fréquence de régénération,
- une résistance thermomécanique forte, c'est-à-dire permettant une durée de vie prolongée du filtre,
- un volume de stockage des résidus plus important.

L'augmentation de la perte de charge en fonction du niveau de chargement en suies du filtre est notamment directement mesurable par la pente de chargement ΔP/Mₛᵤᵢₑₛ, dans lequel ΔP représente la perte de charge et Mₛᵤᵢₑₛ la masse de suie accumulée dans le filtre.

De manière à améliorer l'une ou l'autre des propriétés précédemment décrites, il a déjà été proposé dans l'art antérieur de modifier la forme des canaux de la structure filtrante de différentes manières :

Par exemple, pour augmenter à volume de filtre constant, la surface de filtration dudit filtre, il a été proposé, dans la demande de brevet WO 05/016491, des éléments filtrants dont la forme et le volume interne des canaux d'entrée et de sortie sont différents. Dans de telles structures, les éléments de paroi se succèdent, en coupe transversale et en suivant un rang horizontal et/ou vertical de canaux, pour définir une forme sinusoïdale ou en vague (wavy en anglais). Les éléments de paroi ondulent typiquement d'une demi période de sinusoïde sur la largeur d'un canal. De telles configurations de canaux permettent d'obtenir une perte de charge faible et un volume de stockage de suies important. Ce type de structure présente cependant une perte de charge initiale combinée à une pente de chargement en suie trop élevées et les filtres réalisés avec ce type de configuration de canaux ne permettent donc pas de répondre à l'ensemble des besoins définis précédemment.

Selon une autre configuration, le brevet US 4417908 propose des cellules ou canaux de section hexagonale, un canal d'entrée étant entouré de six canaux de sortie (voir notamment la figure 11). Le volume de stockage en suies de telles structures reste cependant encore globalement faible.

En variante, la demande de brevet US2007/0065631 propose des filtres dont les cellules hexagonales sont composées de parois ondulées. Cette configuration présente cependant l'inconvénient d'induire une capacité de stockage des résidus trop faible, en particulier lorsque le filtre est chargé en suies.

On voit ainsi que si chacune des configurations de l'art antérieur permet d'améliorer au moins une des propriétés recherchées, aucune des solutions décrites ne fournit cependant un compromis acceptable entre l'ensemble des propriétés recherchées, telles que précédemment exposées. En général, on peut remarquer que, pour chacune des configurations de l'art antérieur, l'amélioration obtenue pour l'une des propriétés du filtre est accompagnée de la détérioration conjointe d'une autre, de telle sorte que l'amélioration finalement obtenue est généralement mineure au regard des inconvénients induits.

Le document WO 2007/134897 décrit des structures de filtration en nid d'abeille avec sorties à forme d'hexagone régulier entourées d'entrées à forme d'hexagone irrégulier.

La présente invention a ainsi pour but de fournir une structure filtrante présentant le meilleur compromis entre la perte de charge induite, la pente de chargement ΔP/Mₛᵤᵢₑₛ, la masse, la surface totale de filtration, le volume de stockage des suies et des résidus et la résistance thermomécanique, tel que précédemment décrit.

Dans sa forme la plus générale, la présente invention se rapporte à une structure de filtration de gaz chargés en particules, du type en nid d'abeilles et comprenant un ensemble de canaux adjacents longitudinaux d'axes parallèles entre eux séparés par des parois poreuses filtrantes, lesdits canaux étant alternativement bouchés à l'une ou l'autre des extrémités de la structure de façon à définir des canaux d'entrée et des canaux de sortie pour le gaz à filtrer, et de façon à forcer ledit gaz à traverser les parois poreuses séparant les canaux d'entrée et de sortie, ladite structure se caractérisant en ce que :
- chaque canal de sortie présente une paroi commune avec six canaux d'entrée,
- chaque canal de sortie est constitué de six cotés concaves ou de six cotés convexes par rapport au centre dudit canal, de largeur a sensiblement identique, de façon à former un canal de section sensiblement hexagonale et régulière,
- au moins deux canaux d'entrée partageant une paroi avec un même canal de sortie partagent entre eux une paroi commune de largeur b,
- le rapport des largeurs b/a est égal à 1.

Selon un mode de réalisation possible, chaque canal de sortie présente une paroi commune avec six canaux d'entrée et chaque paroi commune constitue un coté dudit canal de sortie.

Selon un mode préféré, au moins deux cotés adjacents d'un canal d'entrée présentent, en coupe, une courbure différente.

Selon un premier mode, les parois constituant les canaux de sortie sont convexes par rapport au centre desdits canaux de sortie.

Selon un autre mode, les parois constituant les canaux de sortie sont concaves par rapport au centre desdits canaux de sortie.

Selon l'invention, la paroi commune de largeur b entre deux canaux d'entrée peut être plane.

Typiquement, la distance maximale, selon une coupe transversale, entre un point extrême de la ou les parois concaves ou convexes d'un canal de sortie et le segment de droite reliant les deux extrémités de ladite paroi est supérieur à 0 et inférieur à 0,5 a.

Dans les structures de filtration selon l'invention, la densité des canaux est typiquement comprise entre environ 1 et environ 280 canaux par cm² et de préférence compris entre 15 et 40 canaux par cm².

Dans les structures de filtration selon l'invention, l'épaisseur moyenne des parois est typiquement comprise de préférence entre 100 et 1000 microns, de préférence entre 150 et 450 microns.

En général, les largeurs a ou b sont comprises entre environ 0,05mm et environ 4,00mm, de préférence comprise entre environ 0,10mm et environ 2,50mm, et de manière très préférée comprise entre environ 0,20mm et environ 2mm.

Selon un mode de réalisation de l'invention, les parois sont à base de carbure de silicium SiC.

L'invention se rapporte également à un filtre assemblé comprenant une pluralité de structures filtrantes telles que précédemment décrites, lesdites structures étant liées entre elles par un ciment.

L'invention se rapporte en outre à l'utilisation d'une structure de filtration ou d'un filtre assemblé tels que précédemment décrits comme dispositif de dépollution sur une ligne d'échappement d'un moteur Diesel ou Essence de préférence Diesel.
Les figures 1 à 6 illustrent trois exemples de réalisation non limitatifs d'une structure filtrante présentant une configuration des canaux selon l'invention.
La figure 1 est une vue de face en élévation d'une portion de la face avant d'un filtre selon une première réalisation selon l'invention, comprenant des canaux d'entrée et de sortie à six parois et dans laquelle les parois des canaux de sortie sont convexes par rapport au centre desdits canaux.
La figure 2 illustre plus en détail le mode déjà décrit en relation avec la figure 1.
La figure 3 est une vue de face en élévation d'une portion de la face avant d'un filtre selon une seconde réalisation selon l'invention, comprenant des canaux d'entrée et de sortie à six parois et dans laquelle les parois des canaux de sortie sont concaves par rapport au centre desdits canaux.
La figure 4 illustre plus en détail le mode déjà décrit en relation avec la figure 3.
La figure 5 est une vue de face en élévation d'une portion de la face avant d'un filtre selon une troisième réalisation selon l'invention, sensiblement identique au mode déjà décrit en relation avec la figure 3, mais dans lequel le centre de courbure des parois concaves des canaux de sortie est décalé.
La figure 6 illustre plus en détail le mode déjà décrit en relation avec la figure 5.

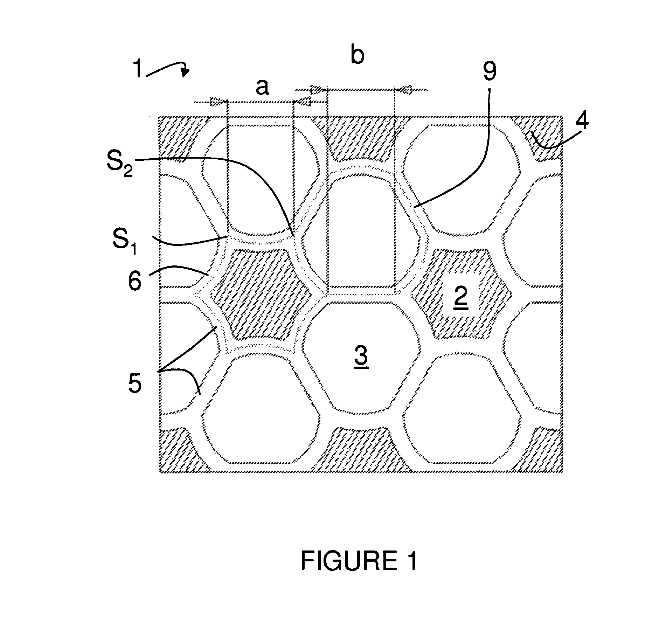

Dans toutes les figures 1 à 6, des éléments de même nature sont désignés par les mêmes numéros de référence. Sur la figure 1, on a représenté une vue en élévation de la face d'entrée des gaz d'un morceau de l'unité de filtration monolithique 1. L'unité présente des canaux d'entrée 3 et des canaux de sortie 2. Les canaux de sortie sont classiquement obstrués sur la face d'entrée des gaz par des bouchons 4. Les canaux d'entrée sont également bouchés mais sur la face opposée (arrière) du filtre, de manière à ce que les gaz à purifier soient forcés de traverser les parois poreuses 5. La structure filtrante selon l'invention est caractérisée par la présence d'un canal de sortie 2 de forme générale hexagonale et régulière, c'est-à-dire que ses 6 cotés sont d'une longueur sensiblement identique a et que deux cotés adjacents forment un angle proche de 120°. Selon le mode représenté sur la figure 1, les six parois constituant un canal de sortie 2 sont convexes par rapport au centre dudit canal de sortie, c'est-à-dire que lesdites parois présente une courbure orientée vers le centre du canal 2. Un canal de sortie 2, régulier et à parois convexes, est en contact avec 6 canaux d'entrée 3 d'une forme générale également hexagonale mais irrégulière, c'est-à-dire formés par des parois adjacentes dont au moins deux présentent une courbure différente, selon une coupe transversale.

Les canaux d'entrée présentent selon l'invention une paroi commune 9 de longueur b.

Les structures selon l'invention sont caractérisées en ce que le rapport b/a est égal à 1.

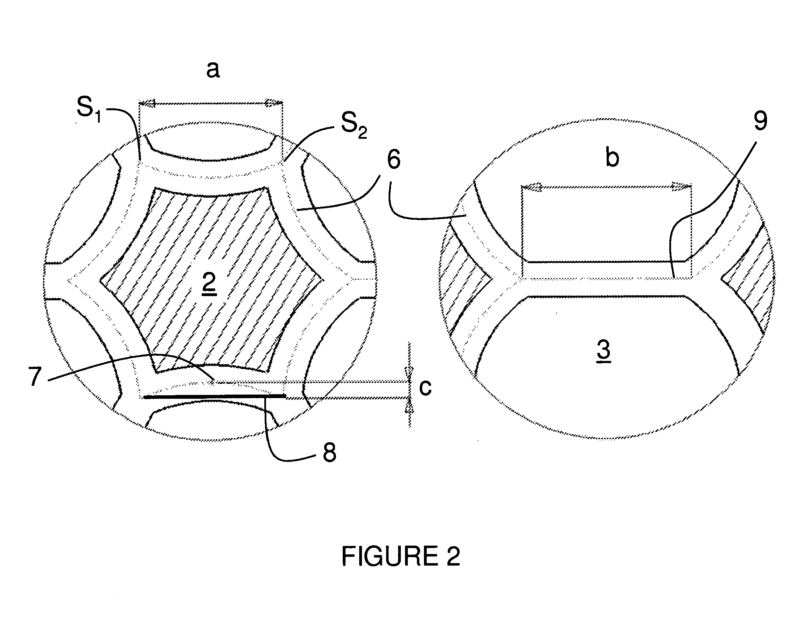

Telles que représentées sur la vue en coupe transversale de la figure 2, les distances a et b sont définies selon l'invention comme les distances reliant les deux sommets S1 et S2 de la paroi considérée, lesdits sommets S1 et S2 s'inscrivant sur l'âme centrale 6 de ladite paroi. On obtient ainsi des valeurs de a et de b indépendantes de l'épaisseur des parois. De préférence l'épaisseur des parois est constante selon invention dans toute la longueur et l'épaisseur du filtre.

La figure 2 illustre une vue plus détaillée de la figure 1. Tel que représenté sur la figure 2 et selon l'invention, on définit une distance maximale c, selon une coupe transversale, comme la distance entre le point extrême 7 d'une paroi convexe d'un canal de sortie 2 et le segment de droite 8 reliant les deux extrémités S1 et S2 de la paroi, c'est-à-dire comme la distance séparant le point le plus éloigné 7 de l'âme centrale du segment de droite 8 reliant S1 et S2 le long d'une paroi.

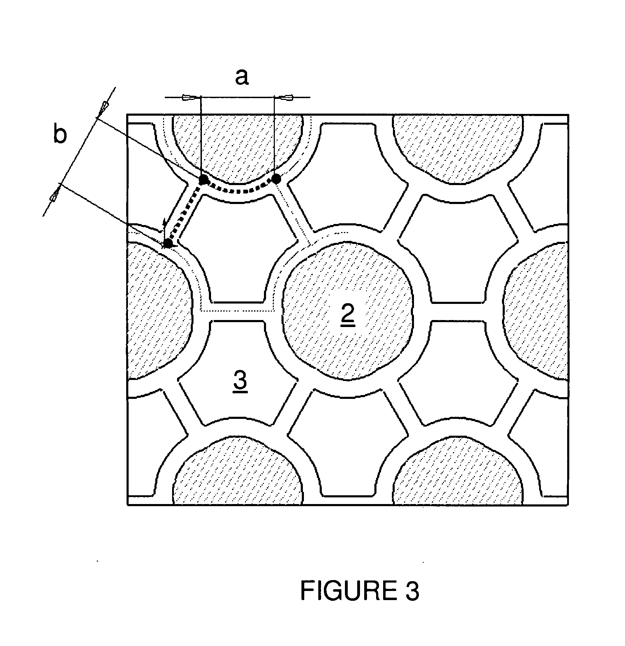

La figure 3 illustre un mode de réalisation alternatif du précédent, dans lequel les canaux de sortie 2 sont cette fois constitués de parois concaves par rapport au centre d'un canal de sortie.

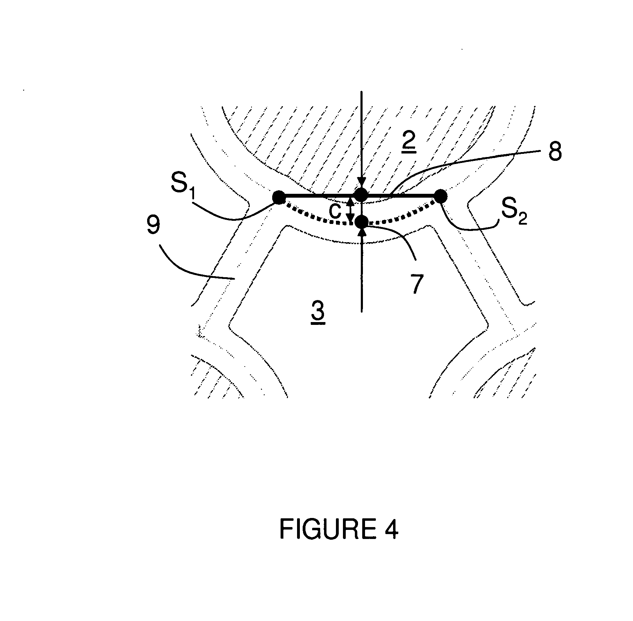

La figure 4 est une vue plus en détail de la figure 3, dans laquelle on a représenté le segment de droite 8 reliant les points S1 et S2, ainsi que le point extrême 7 pour la définition du paramètre c selon l'invention.

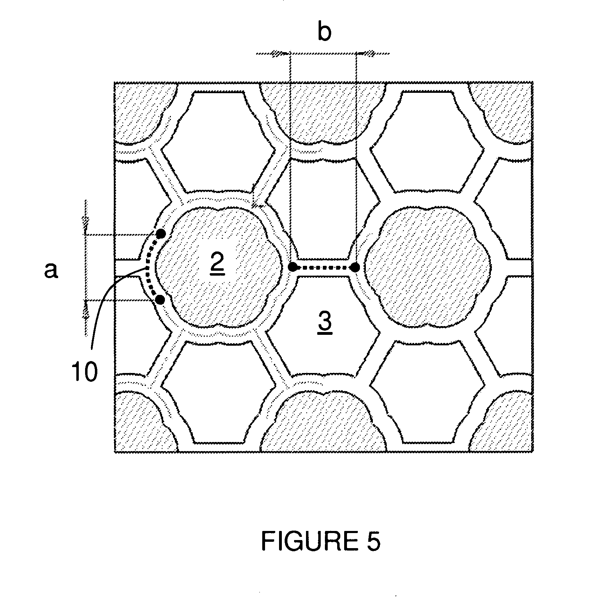

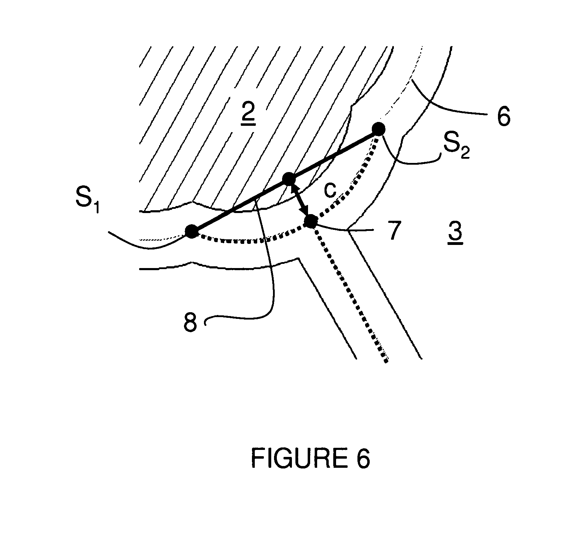

Les figures 5 et 6 illustrent un mode de réalisation alternatif du précédent, dans lequel le centre de la courbure 10 d'une paroi est décalé. La figure 6 est une vue de détail de la figure 5 dans laquelle on a représenté comme précédemment le segment de droite 8 reliant les points S1 et S2, ainsi que le point extrême 7 pour la définition du paramètre c selon l'invention, selon ce mode particulier.

Telle que représentée sur les modes de réalisation décrits précédemment en relation avec les figures 1 à 6, la paroi commune 9 de longueur b séparant deux canaux d'entrée est préférentiellement plane sur toute la longueur du monolithe, c'est-à-dire qu'elle ne présente pas de courbure concave ou convexe. On ne sortirait cependant pas du cadre de l'invention si la paroi commune 9 présentait un autre profil, tel que par exemple une courbure telle qu'une convexité ou une concavité, voire même un profil ondulé par exemple du type sinusoïdal.

Selon l'invention et telles que décrites dans les modes de réalisation précédents, les parois d'un canal de sortie sont soit toutes concaves, soit toutes convexes pour former en coupe transversale une forme d'hexagone régulier et la distance c telle que précédemment définie est supérieure à 0 et inférieure à 0,5 a (0,5 x a). De préférence, c est supérieur à 0,01 a et de manière très préférée, supérieur à 0,03 a, voire même supérieur à 0,05 a. De préférence, c est inférieur à 0,30 a et de manière très préférée inférieur à 0,20 a.

L'invention et ses avantages par rapport aux structures déjà connues seront mieux compris à la lecture des exemples non limitatifs qui suivent.

### Exemple 1 :

On a synthétisé selon les techniques de l'art, par exemple décrites dans les brevets EP 816065, EP 1 142 619, EP 1 455 923 ou encore WO 2004/090294, une première population d'éléments monolithiques ou monolithes en forme de nid d'abeille et en carbure de silicium.

Pour ce faire, on mélange dans un malaxeur :
- 3000 g d'un mélange de particules ou grains de carbure de silicium de pureté supérieure à 98% et composé de deux fractions granulométriques. Une première fraction présente un diamètre médian d₅₀ compris entre 5 µm et 50 µm, au moins 10% en masse des grains composant cette fraction présentant un diamètre supérieur à 5 µm. La deuxième fraction présente un diamètre médian des grains inférieur à 5 µm.
   Au sens de la présente description, le diamètre médian désigne le diamètre des particules au dessous duquel se trouve 50% en masse de la population des particules.
- 150 g d'un liant organique du type cellulose.
   On ajoute de l'eau et on malaxe jusqu'à obtenir une pâte homogène dont la plasticité permet l'extrusion, la filière étant configurée pour l'obtention de blocs monolithes de section carrée et dont les canaux internes présentent également une section transversale de forme carrée, tel qu'actuellement commercialisés.

Les monolithes crus obtenus sont séchés par micro-onde pendant un temps suffisant pour amener la teneur en eau non liée chimiquement à moins de 1% en masse.

Les canaux de chaque face du monolithe sont alternativement bouchés selon des techniques bien connues, par exemple décrites dans la demande WO 2004/065088.

Les monolithes (éléments) sont ensuite cuits jusqu'à une température supérieure à 2100°C qui est maintenue pendant 5 heures. Le matériau poreux obtenu, présente une porosité ouverte de 39% et un diamètre moyen de distribution de pores de l'ordre de 15µm. Les caractéristiques dimensionnelles des éléments ainsi obtenus sont données dans le tableau 1 ci-après. La structure obtenue présente une périodicité c'est à dire une distance entre 2 canaux adjacents, égale à 1,89mm.

On a ensuite formé un filtre assemblé à partir des monolithes. Seize éléments issus d'un même mélange ont été assemblés entre eux selon les techniques classiques par collage au moyen d'un ciment de composition chimique suivante : 72% poids de SiC, 15% poids d'Al₂O₃, 11% poids de SiO₂, le reste étant constitué par des impuretés majoritairement de Fe₂O₃ et d'oxydes de métaux alcalins et alcalino-terreux. L'épaisseur moyenne du joint entre deux blocs voisins est de l'ordre de 1 à 2 mm. L'ensemble est ensuite usiné, afin de constituer des filtres assemblés de forme cylindrique d'environ 14,4 cm de diamètre.

### Exemple 2 :

La technique de synthèse des monolithes décrite précédemment est également reprise à l'identique, mais la filière est cette fois adaptée de manière à réaliser des blocs monolithes se caractérisant par une disposition en vague des canaux internes. Des monolithes conformes à ceux décrits en relation avec la figure 3 de la demande WO 05/016491 sont obtenus. Selon une coupe transversale, l'ondulation des parois est caractérisée par un taux d'asymétrie, tel que défini dans la demande WO 05/016491, égal à 11%. Les caractéristiques dimensionnelles des éléments ainsi obtenus sont données dans le tableau 1 ci-après. La structure obtenue présente une périodicité, c'est à dire une distance entre 2 canaux adjacents, égale à 1,95mm.

### Exemple 3 :

La technique de synthèse des monolithes décrite précédemment est également reprise à l'identique, mais la filière est cette fois-ci adaptée de manière à réaliser des blocs monolithes se caractérisant par une disposition octogonale des canaux internes d'entrée (souvent appelée structure carrée/octogonale dans le domaine) telle qu'illustrée par la figure 6b de la demande EP 1 495 791. Les caractéristiques dimensionnelles des éléments ainsi obtenus sont données dans le tableau 1 ci-après. La structure obtenue présente une périodicité, c'est à dire une distance entre 2 canaux adjacents, égale à 2,02mm.

### Exemple 4 :

La technique de synthèse décrite précédemment est également reprise à l'identique, mais la filière est cette fois-ci adaptée de manière à réaliser des blocs monolithes se caractérisant par une disposition des canaux internes d'entrée et de sortie de section transversale de forme hexagonale régulière et formés par des parois planes, conformément à l'enseignement de la figure 11 du brevet US 4417908. Les paramètres de la structure à canaux hexagonaux réguliers ainsi obtenue sont a = b = 1,22 mm.

### Exemple 5:

La technique de synthèse des monolithes décrite précédemment est également reprise à l'identique, mais la filière est cette fois-ci adaptée de manière à réaliser des blocs monolithes se caractérisant par une disposition des canaux internes selon la figure 11 de la demande de brevet US2007/065631, avec des parois ondulées, les canaux de sortie et les canaux d'entrée présentant une section identique en coupe. La disposition des canaux est caractérisée par les valeurs suivantes :
a = 1,22mm
b = 1,22 mm
c' = 0,05mm (c'est la distance maximale d'un point de la paroi ondulée par rapport au segment de droite reliant les deux sommets de ladite paroi, selon une projection en coupe transversale du monolithe).

### Exemple 6 (selon l'invention):

La technique de synthèse des monolithes décrite précédemment est également reprise à l'identique, mais la filière est cette fois-ci adaptée de manière à réaliser des blocs monolithes se caractérisant par une disposition des canaux internes selon l'invention et conforme à la représentation donnée sur les figures 1 et 2, c'est-à-dire avec des parois convexes par rapport au centre d'un canal de sortie régulier. La disposition des canaux est caractérisée par les valeurs suivantes :
a = 1,22mm
b = 1,22mm
c = 0,05mm = 0,04 a

Les principales caractéristiques structurelles des éléments obtenus selon les exemples 1 à 6 sont reportées dans le tableau 1 ci-dessous. La technique d'assemblage et d'obtention des filtres est la même pour tous les exemples et telle que décrite dans l'exemple 1.

**Tableau 1**

| Exemples | 1 | 2 | 3 | 4 | 5 | 6 |
|---|---|---|---|---|---|---|
| Géométrie des canaux | carrée | wavy | carrée/ octogonale | Hexa. reg | Selon Figure 11 US2007/065631 | Selon invention |
| Tailles des éléments monolithes (mm) | 36 | 36 | 36 | 36 | 36 | 36 |
| Paramètres a et b (mm) | - | - | - | 1,22 | 1,22 | 1,22 |
| Longueur des éléments (cm) | 20,32 | 20,32 | 20,32 | 20,32 | 20,32 | 20,32 |
| Epaisseure des parois internes (µm) | 380 | 340 | 390 | 300 | 300 | 300 |
| Ratio : canaux entrée / canaux sortie | 1/1 | 1/1 | 1/1 | 2/1 | 2/1 | 2/1 |

Les échantillons obtenus ont été évalués et caractérisés selon les modes opératoires suivants:

### A- Mesure de perte de charge à l'état chargé ou non et de la pente de chargement:

Par perte de charge, on entend au sens de la présente invention la pression différentielle existant entre l'amont et l'aval du filtre. La perte de charge a été mesurée selon les techniques de l'art, pour un débit de gaz de 250 kg/h et une température de 250°C, dans un premier temps sur les filtres neufs.

Pour la mesure de perte sur filtre chargé, les différents filtres sont préalablement montés sur une ligne d'échappement d'un moteur diesel 2.0 L mis en marche à pleine puissance (4000 tr/minutes) pendant 30 minutes puis démontés et pesés afin de déterminer leur masse initiale. Les filtres sont ensuite remontés sur banc moteur avec un régime à 3000 tr/min et un couple de 50 Nm afin d'obtenir des charges en suies dans le filtre de 7 g/l. La mesure de perte de charge sur le filtre ainsi chargé en suies est réalisée comme sur le filtre neuf. On mesure aussi la perte de charge en fonction de différents taux de chargements compris entre 0 et 10 gramme/litre afin d'établir la pente de chargement ΔP/mₛᵤᵢₑ.

### B- Mesure de la résistance thermomécanique :

Les filtres sont montés sur une ligne d'échappement d'un moteur 2.0 L diesel à injection directe mis en marche à pleine puissance (4000 tr/minutes) pendant 30 minutes puis démontés et pesés afin de déterminer leur masse initiale. Les filtres sont ensuite remontés sur banc moteur avec un régime à 3000 tr/min et un couple de 50 Nm pendant des durées différentes afin d'obtenir une charges en suies de 8 g/litre (en volume du filtre). Les filtres ainsi chargés sont remontés sur la ligne pour subir une régénération sévère ainsi définie : après une stabilisation à un régime moteur de 1700 tours/minute pour un couple de 95 Nm pendant 2 minutes, une post-injection est réalisée avec 70° de phasage pour un débit de post injection de 18mm³/coup. Une fois la combustion des suies initiée, plus précisément lorsque la perte de charge diminue pendant au moins 4 secondes, le régime du moteur est abaissé à 1050 tours/minute pour un couple de 40 Nm pendant 5 minutes afin d'accélérer la combustion des suies. Le filtre est ensuite soumis à un régime moteur de 4000 tours/minute pendant 30 minutes afin d'éliminer les suies restantes.

Les filtres régénérés sont inspectés après découpe pour révéler la présence éventuelle de fissures visibles à l'oeil nu. La résistance thermomécanique du filtre est appréciée au vu du nombre de fissures, un nombre faible de fissures traduisant une résistance thermomécanique acceptable pour une utilisation comme filtre à particules.
Tel que reporté dans le tableau 2, on a attribué les notes suivantes à chacun des filtres :
+++ : présence de très nombreuses fissures,
++ : présence de nombreuses fissures,
+ : présence de quelques fissures,
- : pas de fissures ou rares fissures.
Le volume de stockage en résidus et la surface de filtration ont été déterminés, pour chaque filtre, selon les techniques habituelles bien connues dans le domaine. Les résultats obtenus aux tests pour l'ensemble des exemples 1 à 6 sont regroupés dans le tableau 2 qui suit :

**Tableau 2**

| Exemples | 1 | 2 | 3 | 4 | 5 | 6 |
|---|---|---|---|---|---|---|
| Géométrie des canaux | carrée | wavy | carrée/ octogonale | Hexa. reg | Figure 11 US2007/065631 b/a = 1 | Selon invention |
| Surface de filtration [m²/m³] | 844 | 913 | 911 | 1080 | 1108 | 1130 |
| Masse du filtre [grammes] | 2627 | 2394 | 2448 | 1918 | 2129 | 2129 |
| Volume de stockage en résidus [cm³] | 648 | 977 | 967 | 997 | 989 | 1179 |
| Perte de charge ΔP₀ [mBar] à l'état neuf ou non chargé en suies | 29 | 34,5 | 39 | 26 | 30 | 37 |
| Perte de charge ΔP₀ [mBar] à l'état chargé en suies (7 gr/L) | 165 | 110 | 118 | 90 | 98 | 106,7 |
| Pente de chargement [Pa/grₛᵤᵢₑ/L_{filtre}] | 19,4 | 10,8 | 11,3 | 9,2 | 9,7 | 9,8 |
| Présence de fissures après chargement en suie de 8g/L et régénération sévère | +++ | ++ | ++ | + | + | - |

### Analyse des résultats:

Les résultats reportés dans le tableau 2 montrent que le filtre selon l'exemple 6 présente le meilleur compromis entre les différentes propriétés recherchées dans une application comme filtre à particules dans une ligne d'échappement automobile. Plus particulièrement, les résultats montrent que le filtre selon l'invention présente des volumes possibles de stockage en résidus très fortement améliorés par rapport à ceux de l'art antérieur (exemples 1 à 5). Une telle amélioration se traduit par des durées de vie potentielles plus importantes des filtres, en particulier dans une application automobile, où les résidus issus des combustions successives des suies, lors des phases de régénération, ont tendance à s'accumuler jusqu'à rendre finalement inutilisable le filtre.

Le filtre selon l'invention montre également la plus grande surface de filtration pour toutes les configurations étudiées.

Le filtre selon l'exemple 6 présente une perte de charge à l'état neuf plus élevée que certains filtres déjà connus, mais cet inconvénient est compensé par une pente de chargement faible, qui justifie son utilisation comme filtre à particules dans une ligne d'échappement automobile, d'autant que la perte de charge occasionnée par le filtre, lorsque celui-ci est chargé en suie, apparaît relativement faible, par comparaison avec les autres configurations testées.

Le filtre selon l'exemple 6 présente en outre une résistance thermomécanique améliorée par rapport aux filtres selon l'art antérieur.

Plus particulièrement, du fait de ce meilleur compromis, il devient possible selon l'invention de synthétiser des structures assemblées à partir d'éléments monolithiques de plus grande taille qu'auparavant, tout en garantissant une durée de vie supérieure.

## Revendications

1. Structure de filtration de gaz chargés en particules, du type en nid d'abeilles et comprenant un ensemble de canaux adjacents longitudinaux d'axes parallèles entre eux séparés par des parois poreuses filtrantes, lesdits canaux étant alternativement bouchés à l'une ou l'autre des extrémités de la structure de façon à définir des canaux d'entrée (3) et des canaux de sortie (2) pour le gaz à filtrer, et de façon à forcer ledit gaz à traverser les parois poreuses (5) séparant les canaux d'entrée et de sortie, ladite structure **se caractérisant en ce que** :
- chaque canal de sortie présente une paroi commune avec six canaux d'entrée,
- chaque canal de sortie est constitué de six cotés concaves ou de six cotés convexes par rapport au centre dudit canal, de largeur a sensiblement identique, de façon à former un canal de section sensiblement hexagonale et régulière,
- au moins deux canaux d'entrée partageant une paroi avec un même canal de sortie partagent entre eux une paroi commune (9) de largeur b,
- le rapport des largeurs b/a est égal à 1.

2. Structure de filtration selon la revendication 1, dans laquelle au moins deux cotés adjacents d'un canal d'entrée (3) présentent, en coupe, une courbure différente.

3. Structure de filtration selon la revendication 1 ou 2, dans laquelle les parois constituant les canaux de sortie sont convexes par rapport au centre desdits canaux de sortie.

4. Structure de filtration selon la revendication 1 ou 2, dans laquelle les parois constituant les canaux de sortie sont concaves par rapport au centre desdits canaux de sortie.

5. Structure de filtration selon l'une des revendications précédentes, dans laquelle la paroi commune de largeur b entre deux canaux d'entrée est plane.

6. Structure de filtration selon l'une des revendications précédentes, dans laquelle la distance maximale, selon une coupe transversale, entre un point extrême (7) de la ou les parois concaves ou convexes d'un canal de sortie et le segment de droite (8) reliant les deux extrémités (S1, S2) de ladite paroi est supérieur à 0 et inférieur à 0,5 a.

7. Structure de filtration selon l'une des revendications précédentes, dans laquelle la densité des canaux est comprise entre environ 1 et environ 280 canaux par cm² et de préférence comprise entre 15 et 40 canaux par cm².

8. Structure de filtration selon l'une des revendications précédentes, dans laquelle l'épaisseur moyenne des parois est comprise entre 100 et 1000 microns, et de préférence comprise entre 150 et 450 microns.

9. Structure de filtration selon l'une des revendications précédentes, dans laquelle les largeurs a ou b sont comprises entre environ 0,05mm et environ 4,00mm, de préférence sont comprises entre environ 0,1mm et environ 2,50mm et de manière très préférée sont comprises entre environ 0,20mm et environ 2mm.

10. Structure selon l'une des revendications précédentes, dans laquelle les parois sont à base de carbure de silicium SiC.

11. Filtre assemblé comprenant une pluralité de structures filtrantes selon l'une des revendications précédentes, lesdites structures étant liées entre elles par un ciment.

12. Utilisation d'une structure de filtration ou d'un filtre assemblé selon l'une des revendications précédentes comme dispositif de dépollution sur une ligne d'échappement d'un moteur Diesel ou Essence de préférence Diesel.

## Claims

1. A gas filter structure for filtering particulate-laden gases, of the honeycomb type and comprising an assembly of longitudinal adjacent channels of mutually parallel axes separated by porous filtering walls, said channels being alternately blocked off at one or the other of the ends of the structure so as to define inlet channels (3) and outlet channels (2) for the gas to be filtered and so as to force said gas to pass through the porous walls (5) separating the inlet and outlet channels, said structure being **characterized in that**:
- each outlet channel has a wall common to six inlet walls;
- each outlet channel consists of six concave sides or six convex sides, these being concave or convex with respect to the center of said channel, of approximately identical width a, so as to form a channel of approximately hexagonal and regular cross section;
- at least two inlet channels sharing a wall with one and the same outlet channel share between them a common wall (9) of width b; and
- the ratio of the widths b/a is equal to 1.

2. The filter structure as claimed claim 1, in which at least two adjacent sides of an inlet channel (3) have, in cross section, a different curvature.

3. The filter structure as claimed in claim 1 or 2, in which the walls constituting the outlet channels are convex with respect to the center of said outlet channels.

4. The filter structure as claimed in claim 1 or 2, in which the walls constituting the outlet channels are concave with respect to the center of said outlet channels.

5. The filter structure as claimed in one of the preceding claims, in which the common wall of width b between two inlet channels is plane.

6. The filter structure as claimed in one of the preceding claims, in which the maximum distance, along a cross section, between an extreme point (7) of the concave or convex wall or walls of an outlet channel and the straight segment (8) connecting the two ends (S1, S2) of said wall is greater than 0 and less than 0.5a.

7. The filter structure as claimed in one of the preceding claims, in which the density of the channels is between about 1 and about 280 channels per cm² and preferably between 15 and 40 channels per cm².

8. The filter structure as claimed in one of the preceding claims, in which the average wall thickness is preferably between 100 and 1000 microns, preferably between 150 and 450 microns.

9. The filter structure as claimed in one of the preceding claims, in which the widths a or b are between about 0.05 mm and about 4.00 mm, preferably between about 0.1 mm and about 2.50 mm and very preferably between about 0.20 mm and about 2 mm.

10. The structure as claimed in one of the preceding claims, in which the walls are based on silicon carbide SiC.

11. An assembled filter comprising a plurality of filtering structures as claimed in one of the preceding claims, said structures being bonded together by a cement.

12. The use of a filter structure or of an assembled filter as claimed in one of the preceding claims as a pollution control device on an exhaust line of a diesel or gasoline engine, preferably a diesel engine.

## Patentansprüche

1. Struktur für die Filtration von partikelbeladenen Gasen, wabenförmiger Art und mit einer Anordnung von einander benachbarten Längskanälen mit zueinander parallelen Achsen, die durch poröse Filtrationswände getrennt sind, wobei die Kanäle abwechselnd an dem einen oder dem anderen der Enden der Struktur verschlossen sind, so dass Eintrittskanäle (3) und Austrittskanäle (2) für das zu filternde Gas definiert werden und dass das Gas dazu bewegt wird, die porösen Wände (5), welche die Eintritts- und die Austrittskanäle trennen, zu durchströmen, wobei die Struktur **dadurch gekennzeichnet ist, dass**:
- jeder Austrittskanal eine mit sechs Eintrittskanälen gemeinsame Wand aufweist,
- jeder Austrittskanal von sechs konkaven Seiten oder von sechs konvexen Seiten - bezogen auf das Zentrum des Kanals - mit im Wesentlichen identischer Breite a gebildet ist, so dass ein Kanal mit im Wesentlichen sechseckigen und gleichmäßigen Querschnitt gebildet wird,
- wenigstens zwei Eintrittskanäle, die eine Wand mit einem gleichen Austrittskanal teilen, sich eine gemeinsame Wand (9) der Breite b teilen,
- das Verhältnis der Breiten b:a gleich 1 beträgt.

2. Filtrationsstruktur nach Anspruch 1, wobei wenigstens zwei einander benachbarte Seiten eines Eintrittskanals (3) im Schnitt eine unterschiedliche Krümmung aufweisen.

3. Filtrationsstruktur nach Anspruch 1 oder 2, wobei die Wände, welche die Austrittskanäle bilden, auf das Zentrum der Austrittskanäle bezogen konvex sind.

4. Filtrationsstruktur nach Anspruch 1 oder 2, wobei die Wände, welche die Austrittskanäle bilden, auf das Zentrum der Austrittskanäle bezogen konkav sind.

5. Filtrationsstruktur nach einem der vorstehenden Ansprüche, wobei die gemeinsame Wand der Breite b zwischen zwei Eintrittskanälen eben ist.

6. Filtrationsstruktur nach einem der vorstehenden Ansprüche, wobei in einem Querschnitt der maximale Abstand zwischen einem äußersten Punkt (7) der konkaven oder konvexen Wand oder Wände eines Austrittskanals und dem Geradensegment (8), das die beiden Enden (S1, S2) der Wand verbindet, größer 0 und kleiner 0,5 a ist.

7. Filtrationsstruktur nach einem der vorstehenden Ansprüche, wobei die Dichte der Kanäle zwischen etwa 1 und etwa 280 Kanälen pro cm² und vorzugsweise zwischen 15 und 40 Kanälen pro cm² liegt.

8. Filtrationsstruktur nach einem der vorstehenden Ansprüche, wobei die durchschnittliche Dicke der Wände im Bereich zwischen 100 und 1000 Mikron und vorzugsweise im Bereich zwischen 150 und 450 Mikron liegt.

9. Filtrationsstruktur nach einem der vorstehenden Ansprüche, wobei die Breiten a oder b zwischen etwa 0,05 mm und etwa 4,00 mm, vorzugsweise zwischen etwa 0,1 mm und etwa 2,50 mm und in sehr bevorzugter Weise zwischen etwa 0,20 mm und etwa 2 mm liegen.

10. Struktur nach einem der vorstehenden Ansprüche, wobei die Wände auf der Basis von Siliciumcarbid SiC sind.

11. Zusammengesetztes Filter, das eine Vielzahl von Filtrationsstrukturen nach einem der vorstehenden Ansprüche umfasst, wobei die Strukturen durch einen Zement untereinander verbunden sind.

12. Verwendung einer Filtrationsstruktur oder eines zusammengesetzten Filters nach einem der vorstehenden Ansprüche, als Einrichtung zur Abgasreinigung an einer Auspuffanlage eines Diesel- oder Benzinmotors, vorzugsweise Dieselmotors.
